# EUROPEAN PATENT APPLICATION

(11) **EP 4 727 175 A1**
(43) Date of publication of application: **15.04.2026**
(21) Application number: 23947697.1
(22) Date of filing: 02.08.2023
(51) Int. Cl.: H04W 4/02, H04W 4/80, H04W 88/02

(54) **OPERATION OF ANCHOR IN CLUSTER FOR ULTRA WIDE BAND COMMUNICATION**

(71) Applicant: Samsung Electronics Co., Ltd., Suwon-si, Gyeonggi-do 16677 (KR)
(72) Inventor: SEO, Seungbeom, Suwon-si Gyeonggi-do 16677 (KR); OH, Hyunseob, Suwon-si Gyeonggi-do 16677 (KR); SEO, Jinwook, Suwon-si Gyeonggi-do 16677 (KR)
(74) Representative: HGF
(86) International application number: PCT/KR2023/011359
(87) International publication number: WO 2025/028692

(57) **Abstract**

An operation method of a first anchor device in a stand-alone (SA) state, according to one embodiment of the present disclosure, may comprise the operations of: checking whether a configuration inform message (CIM) is received according to a scan result for a preset time (Tscan); performing ranging with a second anchor device having transmitted the CIM, if the CIM is received according to the scan result; determining a cluster to be joined by the first anchor device, according to the ranging result; and transmitting a cluster join request message (CJRM) to an initiator anchor of the cluster.

## Description

### [Technical Field]

The disclosure relates to UWB communication, and more particularly, to a method for an anchor to operate in a cluster for UWB communication.

### [Background Art]

The Internet is evolving from the human-centered connection network by which humans create and consume information to the Internet of Things (IoT) network by which information is communicated and processed between things or other distributed components. Another arising technology is the Internet of Everything (IoE), which is a combination of the Big data processing technology and the IoT technology through, e.g., a connection with a cloud server. Implementing the IoT requires technical elements, such as sensing technology, a wired/wireless communication and network infrastructure, service interface and security technologies. A recent ongoing research for thing-to-thing connection is on techniques for sensor networking, machine-to-machine (M2M), or machine-type communication (MTC).

In the IoT environment may be offered intelligent Internet Technology (IT) services that collect and analyze the data generated by the things connected with one another to create new value for human life. The IoT may have various applications, such as the smart home, smart building, smart city, smart car or connected car, smart grid, health-care, or smart appliance industry, or state-of-art medical services, through conversion or integration of conventional information technology (IT) techniques and various industries.

As wireless communication systems evolve to provide various services, a need arises for a method for effectively providing such services. For example, it is possible to use a ranging technique for measuring the distance between electronic devices using ultra-wide band (UWB).

### [Detailed Description of the Invention]

### [Technical Problem]

The disclosure provides a method and device for role assignment of an anchor within a cluster for UWB communication and cluster configuration.

### [Technical Solution]

According to an embodiment, a method of operating a first anchor device in a stand-alone (SA) state may include identifying whether a configuration inform message (CIM) is received according to a scan result during a preset time (T_{scan}), upon receiving the CIM according to the scan result, performing ranging with a second anchor device transmitting the CIM, determining a cluster to which the first anchor device is to join according to the ranging result, and transmitting a cluster join request message (CJRM) to an initiator anchor of the cluster.

According to an embodiment, the method of operating the first anchor device may further include, upon failing to receive the CIM according to the scan result, changing a state of the first anchor device to a global initiator state.

According to an embodiment, the method of operating the first anchor device may further include receiving a cluster join approve message (CJAM) corresponding to the CJRM from the initiator anchor, and changing a state of the first anchor device based on the CJAM.

According to an embodiment, a first anchor device in a stand-alone (SA) state includes a transceiver, and a controller. The controller may identify whether a configuration inform message (CIM) is received according to a scan result during a preset time (T_{scan}), upon receiving the CIM according to the scan result, perform ranging with a second anchor device transmitting the CIM, determine a cluster to which the first anchor device is to join according to the ranging result, and control to transmit a cluster join request message (CJRM) to an initiator anchor of the cluster.

### [Advantageous Effects]

Through the embodiments of the disclosure, an optimal anchor role and an optimal cluster may be allocated within a cluster during UWB communication.

### [Brief Description of Drawings]

FIG. 1 illustrates an example architecture of a UWB device according to an embodiment of the disclosure.
FIG. 2 illustrates an example configuration of a framework of a UWB device according to an embodiment of the disclosure.
FIG. 3 illustrates a method for performing communication by a plurality of electronic devices according to an embodiment of the disclosure.
FIG. 4 illustrates a structure of a UWB MAC frame according to an embodiment of the disclosure.
FIG. 5 illustrates a structure of a UWB PHY packet according to an embodiment of the disclosure.
FIG. 6 illustrates an example of a structure of a ranging block and round used for UWB ranging according to an embodiment of the disclosure.
FIG. 7A illustrates schematic operations of a DL-TDoA procedure according to an embodiment of the disclosure.
FIG. 7B illustrates an example message exchange operation of a DL-TDoA procedure according to an embodiment of the disclosure.
FIG. 8 is a view schematically illustrating a method for configuring a multi-cluster chain for time synchronization according to an embodiment of the disclosure.
FIG. 9A illustrates an example of a cluster configuration according to an embodiment of the disclosure.
FIG. 9B illustrates another example of a cluster configuration according to an embodiment of the disclosure.
FIG. 10 is a view illustrating a message scan operation of an anchor (SA) not included in a multi-cluster chain according to an embodiment of the disclosure.
FIG. 11 is a view illustrating an operation of an anchor (GI, I, R) included in a multi-cluster chain according to an embodiment of the disclosure.
FIG. 12 illustrates an example of a ranging time resource structure for dynamic distributed clustering according to an embodiment of the disclosure.
FIG. 13 is a flowchart illustrating an operation of an anchor in a Stand-alone (SA) state according to an embodiment of the disclosure.
FIG. 14 is a flowchart illustrating an operation of an anchor in a Global Initiator (GI) state according to an embodiment of the disclosure.
FIG. 15 illustrates an example of a ranging round of an anchor in a Global Initiator (GI) state according to an embodiment of the disclosure.
FIG. 16 is a flowchart illustrating an operation of an anchor in an Initiator (I) state according to an embodiment of the disclosure.
FIG. 17 is a flowchart illustrating an operation of an anchor in a Responder (R) state according to an embodiment of the disclosure.
FIG. 18 is a block diagram illustrating an electronic device according to an embodiment of the disclosure.

### [Mode for Carrying out the Invention]

Hereinafter, embodiments of the disclosure are described in detail with reference to the accompanying drawings.

In describing embodiments, the description of technologies that are known in the art and are not directly related to the disclosure is omitted. This is for further clarifying the gist of the disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the disclosure, and methods for achieving the same may be understood through the embodiments to be described below taken in conjunction with the accompanying drawings. However, the disclosure is not limited to the embodiments disclosed herein, and various changes may be made thereto. The embodiments disclosed herein are provided only to inform one of ordinary skilled in the art of the category of the disclosure. The disclosure is defined only by the appended claims. The same reference numerals refer to the same components throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

Hereinafter, the operational principle of the disclosure is described below with reference to the accompanying drawings. When determined to make the subject matter of the disclosure unnecessarily unclear, the detailed description of known functions or configurations may be skipped in describing embodiments of the disclosure. The terms as used herein are defined considering the functions in the disclosure and may be replaced with other terms according to the intention or practice of the user or operator. Therefore, the terms should be defined based on the overall disclosure.

Hereinafter, embodiments of the disclosure are described in detail with reference to the accompanying drawings. Further, although a communication system using UWB is described in connection with embodiments of the disclosure, as an example, embodiments of the disclosure may also apply to other communication systems with similar technical background or features. For example, a communication system using Bluetooth or ZigBee may be included therein. Further, embodiments of the disclosure may be modified in such a range as not to significantly depart from the scope of the disclosure under the determination by one of ordinary skill in the art and such modifications may be applicable to other communication systems.

When determined to make the subject matter of the disclosure unclear, the detailed description of the known art or functions may be skipped. The terms as used herein are defined considering the functions in the disclosure and may be replaced with other terms according to the intention or practice of the user or operator. Therefore, the terms should be defined based on the overall disclosure.

In general, wireless sensor network technology is largely divided into a wireless local area network (WLAN) technology and a wireless personal area network (WPAN) technology according to the recognition distance. In this case, WLAN is a technology based on IEEE 802.11 which enables access to the backbone network within a radius of about 100m. WPAN is a technology based on IEEE 802.15 which includes Bluetooth, ZigBee, and ultra-wide band (UWB). A wireless network in which such a wireless network technology is implemented may include a plurality of electronic devices.

According to the definitions by the Federal Communications Commission (FCC), UWB may refer to a wireless communication technology that uses a bandwidth of 500 MHz or more or a bandwidth corresponding to a center frequency of 20% or more. UWB may mean a band itself to which UWB communication is applied. UWB may enable secure and accurate ranging between devices. Thus, UWB enables relative position estimation based on the distance between two devices or accurate position estimation of a device based on the distance from fixed devices (whose positions are known).

The terminology used herein is provided for a better understanding of the disclosure, and changes may be made thereto without departing from the technical spirit of the disclosure.

"Application dedicated file (ADF)" may be, e.g., a data structure in an application data structure that may host an application or application specific data.

"Application protocol data unit (APDU)" may be a command and a response used when communicating with the application data structure in the UWB device.

"Application specific data" may be, e.g., a file structure having a root level and an application level including UWB controlee information and UWB session data required for a UWB session.

"Controller" may be a ranging device that defines and controls ranging control messages (RCM) (or control messages).

"Controllee" may be a ranging device using a ranging parameter in the RCM (or control message) received from the controller.

Unlike "static STS," "dynamic scrambled timestamp sequence (STS) mode" may be an operation mode in which the STS is not repeated during a ranging session. In this mode, the STS may be managed by the ranging device, and the ranging session key that generates STS may be managed by a secure component.

"Applet" may be, e.g., an applet executed on the secure component including UWB parameters and service data. In this disclosure, Applet may be a FiRa Applet defined by FiRa.

"Ranging device" may be a device capable of performing UWB ranging. In the disclosure, the Ranging Device may be an Enhanced Ranging Device (ERDEV) defined in IEEE 802.15.4z or a FiRa Device defined by FiRa. The Ranging Device may be referred to as a UWB device.

"UWB-enabled Application" may be an application for UWB service. For example, the UWB-enabled Application may be an application using a Framework API for configuring an OOB Connector, a Secure Service, and/or a UWB service for a UWB session. In this disclosure, "UWB-enabled Application" may be abbreviated as an application or a UWB application. UWB-enabled Application may be a FiRa-enabled Application defined by FiRa.

"Framework" may be a component that provides access to Profiles, individual-UWB configuration and/or notifications. "Framework" may be, e.g., a collection of logical software components including Profile Manager, OOB Connector, Secure Service, and/or UWB service. In the disclosure, the Framework may be a FiRa Framework defined by FiRa.

"OOB Connector" may be a software component for establishing an out-of-band (OOB) connection (e.g., BLE connection) between Ranging Devices. In the disclosure, the OOB Connector may be a FiRa OOB Connector defined by FiRa.

"Profile" may be a previously defined set of UWB and OOB configuration parameters. In the disclosure, Profile may be a FiRa Profile defined by FiRa.

"Profile Manager" may be a software component that implements a profile available on the Ranging Device. In the disclosure, the Profile Manager may be a FiRa Profile Manager defined by FiRa.

"Service" may be an implementation of a use case that provides a service to an end-user.

"Smart Ranging Device" may be a ranging device that may implement an optional Framework API. In the disclosure, the Smart Ranging Device may be a FiRa Smart Device defined by FiRa.

"Global Dedicated File (GDF)" may be a root level of application specific data including data required to establish a USB session.

"Framework API" may be an API used by a UWB-enabled Application to communicate with the Framework.

"Initiator" may be a Ranging Device that initiates a ranging exchange.

"Object Identifier (OID)" may be an identifier of the ADF in the application data structure.

"Out-Of-Band (OOB)" may be data communication that does not use UWB as an underlying wireless technology.

"Ranging Data Set (RDS)" may be data (e.g., UWB session key, session ID, etc.) required to establish a UWB session when it is needed to protect confidentiality, authenticity and integrity.

"Responder" may be a ranging device that responds to the Initiator in a ranging exchange.

"STS" may be a ciphered sequence for increasing the integrity and accuracy of ranging measurement timestamps. The STS may be generated from the ranging session key.

"Secure channel" may be a data channel that prevents overhearing and tampering.

"Secure Component" may be an entity (e.g., SE or TEE) having a defined security level that interfaces with UWBS for the purpose of providing RDS to UWBS, e.g., when dynamic STS is used.

"Secure Element (SE)" may be a tamper-resistant secure hardware component that may be used as a Secure Component in the Ranging Device.

"Secure ranging" may be ranging based on STS generated through a strong encryption operation.

"Secure Service" may be a software component for interfacing with a Secure Component, such as a Secure Element or Trusted Execution Environment (TEE).

"Service Applet" may be an applet on a Secure Component that handles service specific transactions.

"Service Data" may be data defined by a service provider that needs to be transferred between two ranging devices to implement a service.

"Service Provider" may be an entity that defines and provides hardware and software required to provide a specific service to an end-user.

"Static STS mode" is an operation mode in which STS is repeated during a session, and does not need to be managed by the Secure Component.

"Secure UWB Service (SUS) Applet" may be an applet on the SE that communicates with the applet to retrieve data needed to enable secure UWB sessions with other ranging devices. The SUS Applet may transfer corresponding data (information) to the UWBS.

"UWB Service" may be a software component that provides access to the UWBS.

"UWB Session" may be a period from when the Controller and the Controllee start communication through UWB until the communication stops. A UWB Session may include ranging, data transfer, or both ranging and data transfer.

"UWB Session ID" may be an ID (e.g., a 32-bit integer) that identifies the UWB Session, shared between the controller and the controllee.

"UWB session key" may be a key used to protect the UWB Session. The UWB Session Key may be used to generate the STS. In this disclosure, the UWB session key may be a UWB ranging session key (URSK), and may be abbreviated as a session key.

"UWB subsystem (UWBS)" may be a hardware component implementing the UWB PHY and MAC layers specifications. UWBS may have an interface to Framework and an interface to Secure Component to search for RDS. In this disclosure, the UWB PHY and MAC specifications may be, e.g., FiRa PHY and FiRa MAC specifications defined by FiRa referring to IEEE 802.15.4/4z.

"UWB message" may be a message including a payload IE transmitted by the UWB device (e.g., ERDEV).

The "ranging message" may be a message transmitted by a UWB device (e.g., ERDEV) in a UWB ranging procedure. For example, the ranging message may be a message, such as a ranging initiation message (RIM), a ranging response message (RRM), a ranging final message (RFM), or a measurement report message (MRM), transmitted by a UWB device (e.g., ERDEV) in a specific phase of the ranging round. A ranging message may include one or more UWB messages. If necessary, a plurality of ranging messages may be merged into one message. For example, in the case of non-deferred DS-TWR ranging, RFM and MRM may be merged into one message in a ranging final phase.

"Payload IE" may be referred to as a payload information element and may be included in the MAC payload of the UWB MAC frame defined in IEEE 802.15.4/4z. The MAC payload may include a plurality of payload IEs.

"Data transferIE" may be an additional payload IE for transmitting application data. Application data may be data transferred from a framework or application above the UWB MAC Layer. The data transfer IE may be used in the procedure for ranging between the initiator and the responder. In this case, the ranging message may include at least one or both of the payload IE for ranging and the data transfer IE for application data transfer. For example, the data transfer IE may be included and transmitted as part of the payload IE of the MAC payload of a ranging initiation message (RIM) for ranging, a ranging response message (RRM), a ranging final message (RFM), a measurement report message (MRM) and ranging result report message (RRRM). The data transfer IE may be transferred to the payload IE of the MAC payload of the DTM. For example, the data transfer IE may be transferred, together with the DTM payload IE, while being attached to the MAC payload portion of the poll DTM, response DTM, and final DTM.

"UWB channel" may be one of candidate UWB channels allocated for UWB communication. Candidate UWB channels allocated for UWB communication may be channels allocated for UWB communication defined in IEEE 802.15.4/4z. The UWB channel may be used for UWB ranging and/or transaction. For example, the UWB channel may be used for transmission/reception of a ranging frame RFRAME and/or transmission/reception of a data frame.

"Narrow band (NB) channel" may be a channel having a narrower bandwidth than the UWB channel. In an embodiment, the NB channel may be a subchannel of one of the candidate UWB channels allocated for UWB communication. Candidate UWB channels allocated for UWB communication may be channels allocated for UWB communication defined in IEEE 802.15.4/4z. The NB channel may be used for advertising, device discovery, and/or connection setup for additional parameter negotiation/authentication. For example, the NB channel may be used for transmission and reception of an advertisement message, an additional advertising message, a connection request message, and/or a connection confirmation message.

"One-way ranging (OWR)" may be a ranging scheme using a time difference of arrival (TDoA) localization method. The TDoA method corresponds to a method for locating a mobile device (tag device) based on a relative arrival time of a single message or multiple messages. For a description of OWR (TDoA), reference may be made to the description of IEEE 802.15.4z. As an example of the OWR scheme, an uplink (UL)-TDoA scheme may be included.

"Two-way ranging (TWR)" may be a ranging scheme capable of estimating a relative distance between two devices by measuring time of flight (ToF) through the exchange of ranging messages between the two devices. The TWR scheme may be one of double-sided two-way ranging (DS-TWR) and single-sided two-way ranging (SS-TWR). SS-TWR may be a procedure for performing ranging through one round-trip time measurement. DS-TWR may be a procedure for performing ranging through two round-trip time measurements. For a description of SS-TWR and DS-TWR, reference may be made to the description of IEEE 802.15.4z.

"DL-TDoA" may be called Downlink Time Difference of Arrival (DL-TDoA), reverse TDoA, and its default operation may be for the user equipment (tag device) to overhear the message of the anchor device while a plurality of anchor devices broadcast or exchange messages. The user equipment performing the DL-TDoA operation may overhear the messages transmitted by the two anchor devices to calculate a Time Difference of Arrival (TDoA) proportional to the difference between the distances between each anchor device and the user equipment. The user equipment may calculate a relative distance to the anchor device by using TDoA with several pairs of anchor devices and use it for positioning. The operation of the anchor device for DL-TDoA may be similar to that of Double Side-Two Way Ranging (DS-TWR) defined in IEEE 802.15.4z and may further include other useful time information so that the user equipment may calculate the TDoA. In the disclosure, DL-TDoA may be referred to as DL-TDoA localization.

"Anchor device" may be referred to as an anchor, a UWB anchor or a UWB anchor device and may be a UWB device deployed in a specific location to provide a positioning service. For example, the anchor device may be a UWB device installed by a service provider on a wall, ceiling, structure, or the like in a room to provide an indoor positioning service. Anchor devices may be divided into initiator anchors and responder anchors according to the order and role of transmitting messages.

"Initiator anchor" may be referred to as an initiator UWB anchor, an initiator anchor device, or the like and may announce the start of a specific ranging round. The initiator anchor may schedule a ranging slot for the responder anchors operating in the same ranging round to respond. The initiation message of the initiator anchor may be referred to as an initiator Downlink TDoA Message (DTM) or Poll message. The initiation message of the initiator anchor may include a transmission timestamp. The initiator anchor may additionally transfer an end message after receiving responses from the responder anchors. The end message of the initiator anchor may be referred to as Final DTM or Final message. The end message may include the time of the reply to the messages sent by the responder anchors. The end message may include a transmission timestamp.

"Responder anchor" may also be referred to as a Responder UWB anchor, a Responder UWB anchor device, a Responder anchor device, etc. The responder anchor may be a UWB anchor responding to the initiation message of the initiator anchor. The message with which the responder anchor responds may include the time of reply to the initiation message. The message with which the responder anchor responds may be referred to as a Responder DTM or a Response message. The response message of the responder anchor may include a transmission timestamp.

"Cluster" may mean a set of UWB anchors covering a specific area. The cluster may be composed of an initiator UWB anchor and responder UWB anchors responding thereto. For 2D positioning, one initiator UWB anchor and at least two responder UWB anchors are typically required and, for 3D positioning, one initiator UWB anchor and at least three responder UWB anchors are required. If the initiator UWB anchor and the responder UWB anchor may be accurately time-synchronized through a separate wired/wireless connection, one initiator UWB anchor and two responder UWB anchors are required for 2D positioning, and one initiator UWB anchor and three responder UWB anchors are required for 3D positioning. Unless otherwise stated, it is assumed that there is no separate device for wired/wireless time synchronization between UWB anchors. The cluster area may be a space formed by the UWB anchors constituting the cluster. To support the positioning service for a wide area, a plurality of clusters may be configured to provide the positioning service to the user equipment. In this disclosure, a cluster may be referred to as a cell. In the disclosure, the operation of the cluster may be understood as the operation of anchor(s) belonging to the cluster.

"Active ranging round" may be a ranging round operating in an active state. In an active ranging round, anchor devices may exchange DL-TDoA messages, and the tag device (user equipment) may overhear the message transmitted by the anchor device. In this disclosure, the active ranging round may be referred to as an active round.

"In-active ranging round" may be a ranging round operating in an in-active state or sleep state. In the in-active ranging round, anchor devices do not exchange DL-TDoA messages, and the tag device (user equipment) may be in a sleep state. In this disclosure, the in-active ranging round may be referred to as a sleep ranging round, an in-active round, or a sleep round.

"Reference clock" may refer to one common clock that allows the anchors (DT-anchors) and tags (DT-tags) constituting the downlink TDoA system to operate in sync with each other and allows the DT-tag to obtain a correct TDoA value. Since DT-anchors and DT-tags are different terminals and operate with different crystal oscillators, there may be a slight difference in clock speed and, since the power supply time differs, the clock origin may be different. Therefore, a mechanism to maintain the same clock throughout the system is required, which may be called time synchronization. Time synchronization between the components in the cluster may be referred to as intra-cluster synchronization, and the operation in which the plurality of responder anchors constituting one cluster sync with the clock of the initiator anchor of the same cluster may be referred to as intra-cluster synchronization. Synchronizing between adjacent clusters may be referred to as inter-cluster synchronization, and maintaining the same ranging block structure between the initiator anchors of the adjacent clusters may be referred to as inter-cluster synchronization. In the cluster, the clock of the initiator anchor may be a reference clock and, in the entire system, the clock of one specific initiator anchor may be a reference clock.

"Global controller" may be a UWB terminal that may set the order of operation of the DT-anchors constituting the downlink TDoA system, the structure of the cluster, and the reference clock. The global controller may be one of the DT-anchors, and there may be a plurality of global controllers in the same system.

When determined to make the subject matter of the disclosure unnecessarily unclear, the detailed description of related known functions or features may be skipped in describing the disclosure.

Hereinafter, various embodiments of the disclosure are described with reference to the accompanying drawings.

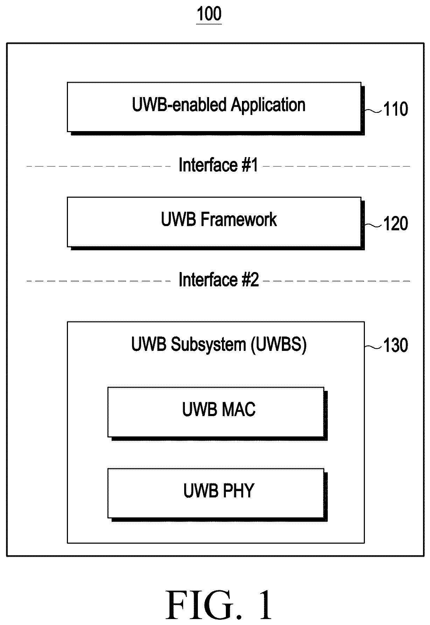

FIG. 1 illustrates an example architecture of a UWB device according to an embodiment of the disclosure.

In the disclosure, the UWB device 100 may be an electronic device supporting UWB communication. The UWB device 100 may be, e.g., a ranging device supporting UWB ranging. In an embodiment, the Ranging Device may be an Enhanced Ranging Device (ERDEV) defined in IEEE 802.15.4z or a FiRa Device defined by FiRa.

In the embodiment of FIG. 1, the UWB device 100 may interact with other UWB devices through a UWB session.

The UWB device 100 may implement a first interface (Interface #1) that is an interface between the UWB-enabled Application 110 and the Framework 120, and the first interface allows the UWB-enabled application 110 on the UWB device 100 to use the UWB capabilities of the UWB device 100 in a predetermined manner. In an embodiment, the first interface may be a Framework API or a proprietary interface, but is not limited thereto.

The UWB device 100 may implement a second interface (Interface #2) that is an interface between the UWB Framework 110 and the UWB subsystem (UWBS, 130). In an embodiment, the second interface may be a UWB Command Interface (UCI) or proprietary interface, but is not limited thereto.

Referring to FIG. 1, the UWB device 100 may include a UWB-enabled Application 110, a Framework (UWB Framework) 120, and/or a UWBS 130 including a UWB MAC Layer and a UWB Physical Layer. Depending on the embodiment, some entities may not be included in the UWB device, or additional entities (e.g., security layer) may be further included.

The UWB-enabled Application 110 may trigger establishment of a UWB session by a UWBS 130 through the first interface. The UWB-enabled Application 110 may use one of previously defined profiles (profile). For example, the UWB-enabled Application 110 may use one of the profiles defined in FiRa or a custom profile. The UWB-enabled Application 110 may use the first interface to handle related events, such as service discovery, ranging notifications, and/or error conditions.

The Framework 120 may provide access to Profiles, individual-UWB configuration and/or notifications. The Framework 120 may support at least one of a function for UWB ranging and transaction execution, a function to provide an interface to the application and UWBS 130, or a function to estimate the location of the device 100. The Framework 120 may be a set of software components. As described above, the UWB-enabled Application 110 may interface with the Framework 120 through the first interface, and the Framework 120 may interface with the UWBS 130 through the second interface.

Meanwhile, in the disclosure, the UWB-enabled Application 110 and/or Framework 120 may be implemented by an application processor (AP) (or processor). Accordingly, in the disclosure, the operation of the UWB-enabled Application 110 and/or the Framework 120 may be understood as performed by an AP (or a processor). In this disclosure, the framework may be referred to as an AP or a processor.

The UWBS 130 may be a hardware component including a UWB MAC Layer and a UWB Physical Layer. The UWBS 130 may perform UWB session management and may communicate with the UWBS of another UWB device. The UWBS 130 may interface with the Framework 120 through the second interface and may obtain the secure data from the Secure Component. In an embodiment, the Framework (or application processor) 120 may transmit a command to the UWBS 130 through UCI, and the UWBS 130 may transmit a response to the command to the Framework 120. The UWBS 130 may transfer a notification to the Framework 120 through the UCI.

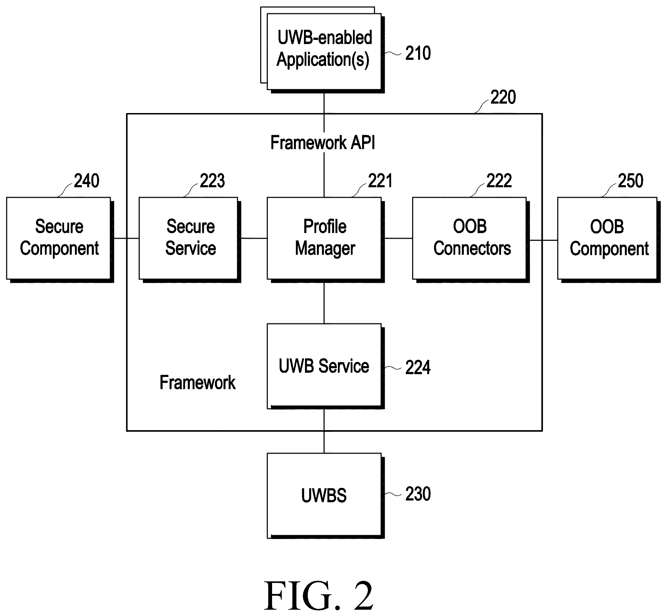

FIG. 2 illustrates an example configuration of a framework of a UWB device according to an embodiment of the disclosure.

The UWB device of FIG. 2 may be an example of the UWB device of FIG. 1.

Referring to FIG. 2, the Framework 220 may include, e.g., software components, such as Profile Manager 221, OOB Connector(s) 222, Secure Service 223 and/or UWB service 224.

The Profile Manager 221 may serve to manage profiles available on the UWB device. Profile may be a set of parameters required to establish communication between UWB devices. For example, a profile may include a parameter indicating which OOB secure channel is used, a UWB/OOB configuration parameter, a parameter indicating whether the use of a particular secure component is mandatory, and/or a parameter related to the file structure of the ADF. The UWB-enabled Application 210 may communicate with the Profile Manager 221 through the first interface (e.g., Framework (API)).

The OOB Connector 222 may serve to establish an OOB connection with another device. The OOB Connector 222 may handle an OOB step including a discovery step and/or a connection step. The OOB component (e.g., BLE component) 250 may be connected to the OOB connector 222.

The Secure Service 223 may play a role of interfacing with a Secure Component 240, such as SE or TEE.

The UWB Service 224 may perform a role of managing the UWBS 230. The UWB Service 224 may provide access to the UWBS 230 from the Profile Manager 221 by implementing the second interface.

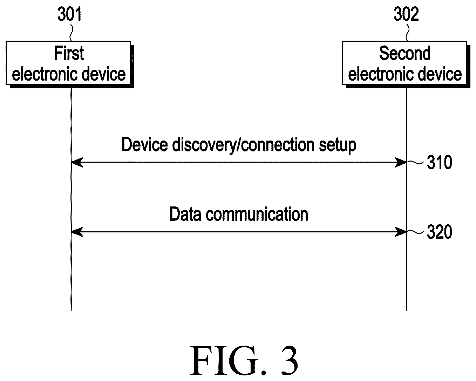

FIG. 3 illustrates a method for performing communication by a plurality of electronic devices according to an embodiment of the disclosure.

The first electronic device 301 and the second electronic device 302 of FIG. 3 may be, e.g., the UWB devices of FIG. 1 or 2.

Referring to FIG. 3, the first electronic device 301 and the second electronic device 302 may perform a device search/connection setup procedure 310 and a data communication procedure 320. The device search/connection setup procedure 310 and data communication procedure 320 may be managed or controlled by the MAC layer (entity) of the electronic device.

### (1) Device search/connection setup procedure

In the disclosure, the device search/connection setup procedure 310 may be a prior procedure performed before the data communication procedure 320. As an example, the device discovery/connection setup procedure 310 may be performed over OOB communication (channel), NB communication (channel), and/or UWB communication (channel).

The device search/connection setup procedure 310 may include at least one of the following operations.
- Device discovery operation: An operation in which the electronic device searches for (discovers) another UWB devices. The device discovery operation may include an operation for transmitting/receiving an advertisement message. In the disclosure, the device discovery operation may be referred to as a discovery operation or an advertising operation.
- Connection setup operation: An operation in which two electronic devices establish a connection. The connection setup operation may include an operation for transmitting/receiving a connection request message and a connection confirmation message. A connection (channel) established through the connection setup operation may be used to configure and control a UWB session for data communication. For example, parameters (e.g., UWB performance parameters (controllee performance parameters), UWB configuration parameters, session key-related parameters) for configuring a UWB session through a secure channel established through the connection setup operation may be negotiated between two electronic devices.

### (2) Data communication procedure

In the disclosure, the data communication procedure 320 may be a procedure for transmitting and receiving data using UWB communication. As an embodiment, the data communication procedure may be performed by UWB communication or NB communication.

The data communication procedure 320 may include at least one of the following operations.
- UWB ranging operation: An operation in which the electronic device performs UWB ranging with another electronic device in a preset UWB ranging scheme (e.g., OWR, SS-TWR, DS-TWR scheme). As an embodiment, the UWB ranging operation may include a ToF measurement operation and/or an AoA measurement operation.
- Transaction operation: An operation in which an electronic device exchanges service data with another electronic device.

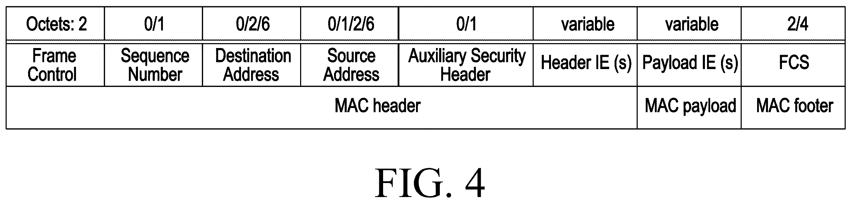

FIG. 4 illustrates a structure of a UWB MAC frame according to an embodiment of the disclosure.

In the embodiment of FIG. 4, the UWB MAC frame may follow the MAC frame structure of IEEE 802.15.4z, for example. In this disclosure, the UWB MAC frame may be simply referred to as a MAC frame or frame. As an embodiment, the UWB MAC frame may be used to transfer UWB data (e.g., UWB message, ranging message, control information, service data, application data, transaction data, etc.).

Referring to FIG. 4, the UWB MAC frame may include a MAC header (MHR), a MAC payload and/or a MAC footer (MFR).

### (1) MAC header

The MAC header may include a Frame Control field, a Sequence Number field, a Destination Address field, a Source Address field, an Auxiliary Security Header field, and/or at least one Header IE field. According to an embodiment, some fields may not be included in the MAC header.

As an embodiment, the Frame Control field may include a Frame type field, a Security Enabled field, a Frame Pending field, an AR field, a PAN ID Compression field, a Sequence Number Suppression field, an IE Present field, a Destination Addressing Mode field, a Frame Version field, and/or a Source Addressing Mode field. Each field is described below.

The Frame Type field may indicate the frame type. As an embodiment, the frame type may include a data type and/or a multipurpose type.

The Security Enabled field may indicate whether an Auxiliary Security Header field exists. The Auxiliary Security Header field may include information required for security processing.

The Frame Pending field may indicate whether the device transmitting the frame has more data for the recipient. In other words, the Frame Pending field may indicate whether there is a pending frame for the recipient.

The AR field may indicate whether acknowledgment for frame reception is required from the recipient.

The PAN ID Compression field may indicate whether the PAN ID field exists.

The Sequence Number Suppression field may indicate whether the Sequence Number field exists. The Sequence Number field may indicate the sequence identifier for the frame.

The IE Present field may indicate whether the Header IE field and the Payload IE field are included in the frame.

The Destination Addressing Mode field may indicate whether the Destination Address field may include a short address (e.g., 16 bits) or an extended address (e.g., 64 bits). The Destination Address field may indicate the address of the recipient of the frame.

The Frame Version field may indicate the frame version. For example, the Frame Version field may be set to a value indicating IEEE std 802.15.4z-2020.

The Source Addressing Mode field may indicate whether the Source Address field exists, and if the Source Address field exists, whether the Source Address field includes a short address (e.g., 16 bits) or an extended address (e.g., 64 bits). The Source Address field may indicate the address of the originator of the frame.

### (2) MAC payload

The MAC payload may include at least one Payload IE field. As an embodiment, the Payload IE field may include a Vendor Specific Nested IE. As an embodiment, the Payload IE field may include the Payload IE field of the UWB message, ranging message or control message.

### (3) MAC footer

The MAC footer may include an FCS field. The FCS field may include a 16-bit CRC or a 32-bit CRC.

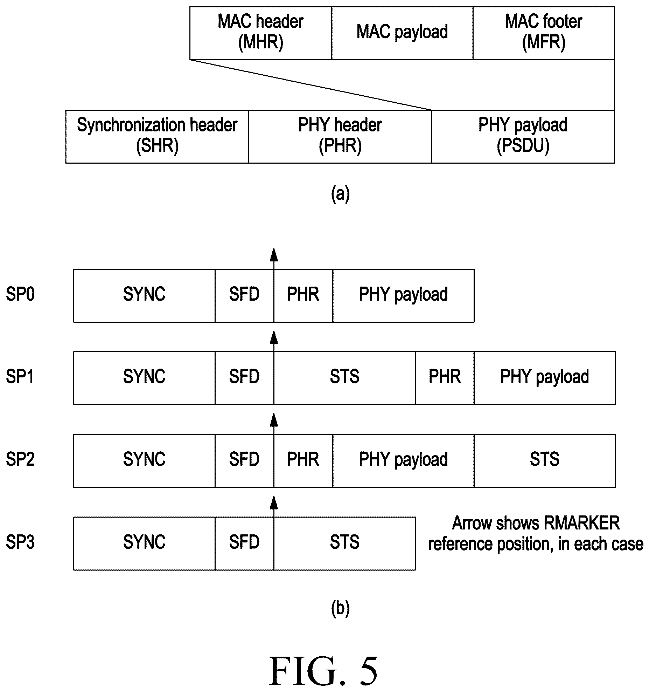

FIG. 5 illustrates a structure of a UWB PHY packet according to an embodiment of the disclosure.

FIG. 5(a) illustrates an example structure of a UWB PHY packet to which the STS packet configuration is not applied, and FIG. 5(b) illustrates an example structure of a UWB PHY packet to which the STS packet configuration is applied. In the disclosure, the UWB PHY packet may be referred to as a PHY packet, a PHY PDU (PPDU), or a frame.

Referring to FIG. 5(a), the PPDU may include a synchronization header (SHR), a PHY header (PHR), and a PHY payload (PSDU). The PSDU may include a MAC frame. As shown in FIG. 4, the MAC frame may include a MAC header (MHR), a MAC payload and/or a MAC footer (MFR). In the disclosure, the synchronization header part may be referred to as a preamble, and the part including the PHY header and the PHY payload may be referred to as a data part.

The synchronization header may be used for synchronization for signal reception and may include a SYNC field and a start-of-frame delimiter (SFD).

The SYNC field may be a field including a plurality of preamble symbols used for synchronization between transmission/reception devices. The preamble symbol may be set through one of previously defined preamble codes.

The SFD field may be a field indicating the end of the SHR and the start of the data field.

The PHY header may provide information about the configuration of the PHY payload. For example, the PHY header may include information about the length of the PSDU, information indicating whether the current frame is an RFRAME, and the like.

Meanwhile, the PHY layer of the UWB device may include an optional mode to provide a reduced on-air time for high density/low power operation. In this case, the UWB PHY packet may include an encrypted sequence (i.e., STS) to increase the integrity and accuracy of the ranging measurement timestamp. The STS may be included in the STS field of the UWB PHY packet and be used for secure ranging.

Referring to FIG. 5(b), in the case of STS packet (SP) setting 0 (SP0), the STS field is not included in the PPDU (SP0 packet). In the case of SP setting 1 (SP1), the STS field is positioned immediately after the Start of Frame Delimiter (SFD) field and before the PHR field (SP1 packet). In the case of SP setting 2 (SP2), the STS field is positioned after the PHY payload (SP2 packet). In the case of SP setting 3 (SP3), the STS field is positioned immediately after the SFD field, and the PPDU does not include the PHR and data field (PHY payload) (SP3 packet). In other words, in the case of SP3, the PPDU does not include the PHR and PHY payload.

In the embodiment of FIG. 5(b), each UWB PHY packet may include RMARKER for defining a reference time. RMARKER may be used to obtain the transmission time, reception time and/or time range of the ranging message (frame) in the UWB ranging procedure.

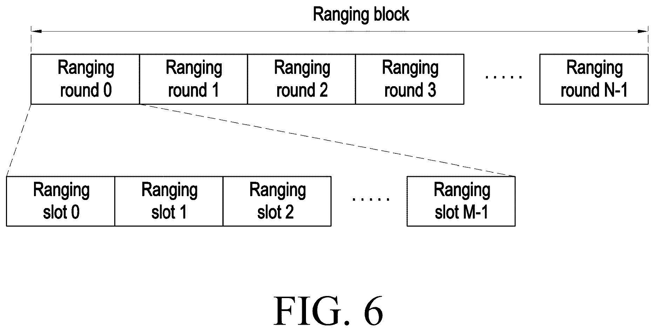

FIG. 6 illustrates an example of a structure of a ranging block and round used for UWB ranging according to an embodiment of the disclosure.

In this disclosure, the ranging block refers to a time period for ranging. The ranging round may be a period of sufficient duration to complete one entire range-measurement cycle (ranging cycle) in which a set of UWB devices participating in a ranging exchange involves. The ranging slot may be a sufficient period for transmission of at least one ranging frame (RFRAME) (e.g., ranging initiation/reply/final message, etc.).

As shown in FIG. 6, one ranging block may include at least one ranging round. Each ranging round may include at least one ranging slot.

When the ranging mode is a block-based mode, a mean time between contiguous ranging rounds may be a constant. Alternatively, when the ranging mode is an interval-based mode, the time between contiguous ranging rounds may be dynamically changed. In other words, the interval-based mode may adopt a time structure having an adaptive spacing.

The number and duration of slots included in the ranging round may be changed between ranging rounds.

In the disclosure, a ranging block, a ranging round, and a ranging slot may be abbreviated as a block, a round, and a slot.

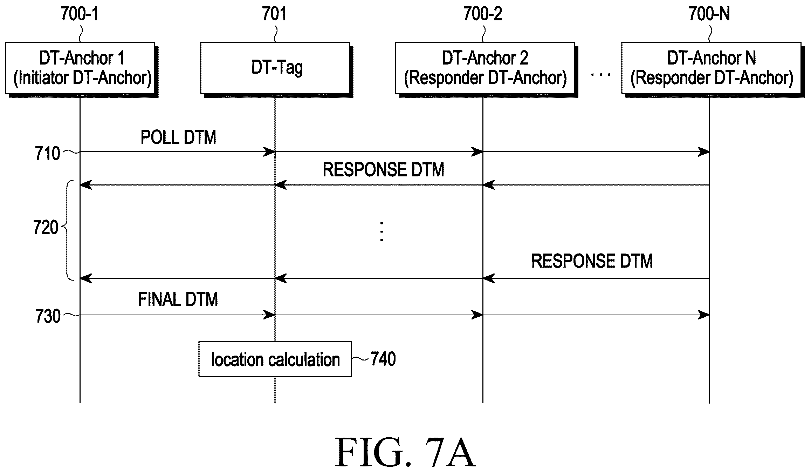

FIG. 7A illustrates schematic operations of a DL-TDoA procedure according to an embodiment of the disclosure.

Referring to FIG. 7A, in operation 710, DT anchor 1 700-1, which is an initiator DL-TDoA (DT) anchor, may initiate a DT procedure by transmitting a Poll message (Poll DTM). According to an embodiment, a Poll message (Poll DTM) may include response schedule information (e.g., schedule information in a unit of ranging slot) of Responder DT anchors.

In operation 720, DT anchor 2 to DT anchor N 700-2,..., 700-N, which are Responder DT anchors, may transmit a response message (Responder DTM). As an example, the Responder DT anchor may identify whether a response message should be transmitted and/or a ranging slot used for transmitting the response message, based on schedule information included in the Poll message. As an embodiment, the response message may include information about a first response time β. Here, the first response time may be the time required for the corresponding Responder DT anchor to receive the initiation message and transmit a response message corresponding to the initiation message.

In operation 730, DT anchor 1 700-1 may end the DT procedure by transmitting a termination message (final DTM). As an embodiment, the termination message may include information about a second response time γ. Here, the second response time may be the time required for the Initiator DT anchor to receive the response message and transmit the termination message.

According to an embodiment, the transmission of the final message (Final DTM) of operation 730 may be omitted, and operation 710 and operation 720 may be performed similar to an SS-TWR operation.

As shown in FIG. 7A, the DT tag 701 may receive (or overhear) the initiation message, the response message, and the end message exchanged between DT anchors 700-1,..., 700-N and obtain (find out) a TDoA curve. The DT tag 701 may obtain a TDoA result by repeating the same on the signals received from, e.g., three or more DT anchors.

In operation 740, the DT tag 701 may obtain a relative position to the DT anchor based on the TDoA result. According to an embodiment, a DT tag 701 may calculate TDoA for each (initiator, responder) pair and obtain (position) a relative position with respect to a DT anchor.

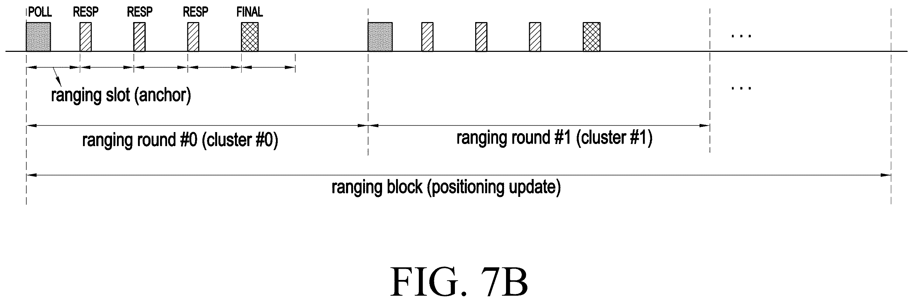

FIG. 7B illustrates an example message exchange operation of a DL-TDoA procedure according to an embodiment of the disclosure.

Referring to FIG. 7B, the ranging block for DL-TDoA may include a plurality of ranging rounds.

As an embodiment, the ranging block may include a plurality of ranging rounds allocated for each cluster. For example, when n clusters are deployed, the ranging blocks may include a first ranging round (ranging round #0) allocated for a first cluster (cluster #0), a second ranging round (ranging round #1) allocated for a second cluster (cluster #1),... and an nth ranging round allocated for an nth cluster. Although not shown in FIG. 7B,

in an embodiment, a plurality of ranging rounds may be allocated to one cluster, or one ranging round may be allocated to a plurality of clusters.

As described above, "cluster" may mean a set of DT anchors (UWB anchors) covering a specific area. The cluster may be composed of an Initiator DT anchor and Responder DT anchors responding thereto. The cluster area may be a space formed by the UWB anchors constituting the cluster. To support the positioning service for a wide area, a plurality of clusters may be configured to provide the positioning service to the user equipment. In this disclosure, a cluster may be referred to as a cell. In the disclosure, the operation of the cluster may be understood as the operation of anchor(s) belonging to the cluster.

A ranging round may include a plurality of ranging slots. In an embodiment, the ranging round may include a plurality of ranging slots allocated for each ranging message transmitted by the UWB anchors belonging to the cluster associated with the ranging round.

For example, if one cluster includes one Initiator DT anchor and three Responder DT anchors as shown in FIG. 7A, the ranging round for the first cluster may include a first ranging slot allocated for transmission/reception of the Poll message of the Initiator DT anchor included in the first cluster, a second ranging slot allocated for transmission/reception of the response message of the first Responder DT anchor, a third ranging slot allocated for transmission/reception of the response message of the second Responder DT anchor, a fourth ranging slot allocated for transmission/reception of the response message of the third Responder DT anchor, and a fifth ranging slot allocated for transmission/reception of the final message of the Initiator DT anchor. As an embodiment, a period other than the duration during which an associated ranging message is transmitted in the corresponding ranging slot may be a sleep period.

In this scheme, ranging slots may be allocated to the ranging round for each cluster.

Through the ranging block structure as in the embodiment of FIG. 7B, each cluster may exchange its own ranging messages (e.g., Poll/Response/Final message) once in a ranging block, and the DT tag (user equipment) may receive these ranging messages and calculate its location. Such an operation may be repeated for each ranging block. Thus, the location of the user equipment may be updated in the period of the ranging block in the corresponding cluster. Accordingly, in the embodiment of FIG. 7B, the ranging block may correspond to a period for positioning update.

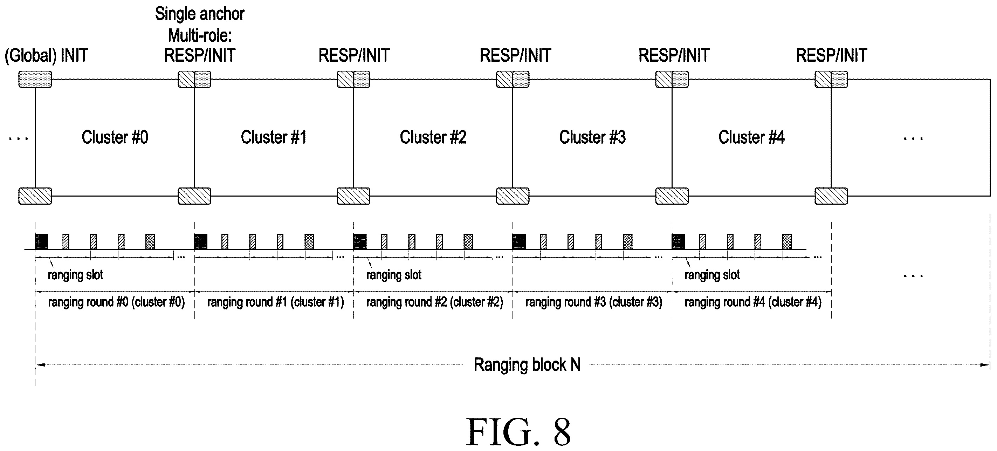

FIG. 8 is a view schematically illustrating a method for configuring a multi-cluster chain for time synchronization according to an embodiment of the disclosure.

The embodiment of FIG. 8 may be an example of a multi-cluster chain configuration for time synchronization.

Referring to FIG. 8, ranging block N may include a plurality of ranging rounds. Among the plurality of ranging rounds, ranging round #0 may be allocated for cluster #0. ranging round #1 for cluster #1, ranging round #2 for cluster #2, ranging round #3 for cluster #3, and ranging round #4 for cluster #4.

As an embodiment, the initiator of cluster #0 associated with the first ranging round (ranging round #0) of ranging block N may transmit scheduling information. As an embodiment, the initiator of cluster #0 may act as a global initiator.

Each anchor receiving the scheduling information may identify its operation time and role based on the scheduling information. Thus, the anchors may perform message exchange operations (e.g., the operation of exchanging the Poll message, response message, and/or final message) for DL-TDoA according to their respective roles in the corresponding ranging round.

Referring to FIG. 8, operations of anchors in each cluster are described below.

### <Operations of anchors in cluster #0>

The initiator of cluster #0 may transmit the Poll message including scheduling information.

The remaining anchors in cluster #0 may receive the Poll message from the initiator and identify that their roles are responders based on the scheduling information included in the Poll message. Further, one anchor of cluster #0 may identify that it plays multiple roles.

Each responder may transmit a response message corresponding to the Poll message to the initiator in the ranging slot allocated for itself. As an embodiment, information about the ranging slot allocated to each responder may be included in the Poll message. For example, information about the ranging slot allocated to each responder may be included in the ranging device management list field included in the Poll message.

The initiator may transmit a final message corresponding to the response message from the responders.

Meanwhile, one of the responders of cluster #0 may play multiple roles. For example, one of the responders in cluster #0 acts as a responder in the current ranging round (ranging round #0), but may act as an initiator in the next ranging round (ranging round #1). Ranging (DL-TDoA) in the next ranging round may be initiated by the responder playing the multiple roles.

### <Operations of anchors in cluster #1>

The initiator of cluster #1 may send the Poll message. As described above, the initiator of cluster #1 is a multi-role anchor and plays a role as a responder in ranging round #0 (previous ranging round) of cluster #0. As an embodiment, the Poll message may include scheduling information.

The remaining anchors (responders) of cluster #1 may receive the Poll message from the initiator and transmit a response message corresponding to the Poll message to the initiator in the ranging slot allocated thereto. As an embodiment, information about the ranging slot allocated to each responder may be included in the Poll message.

The initiator may transmit a final message corresponding to the response message from the responders.

Meanwhile, one of the responders of cluster #1 may play multiple roles. For example, one of the responders in cluster #1 acts as a responder in the current ranging round (ranging round #1), but may act as an initiator in the next ranging round (ranging round #2). Ranging (DL-TDoA) in the next ranging round may be initiated by the responder playing the multiple roles.

### <Operations in the remaining clusters>

In the remaining clusters, similar to the operation in cluster #1, each anchor may perform a message exchange operation for DL-TDoA ranging according to its operation time and role indicated by scheduling information.

The multi-cluster configuration of the embodiment of FIG. 8 corresponds to a multi-cluster chain configuration. Thus, one anchor in a cluster is configured to perform multiple roles. Through the multi-cluster chain configuration, intra-cluster time synchronization and inter-cluster time synchronization are possible. According to an embodiment, the same time structure (ranging block structure) may be shared among all anchors within a multi-cluster configuration.

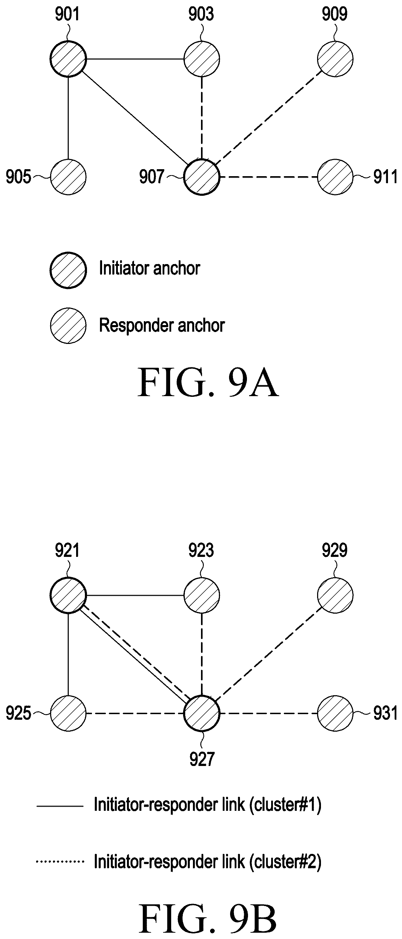

FIG. 9A illustrates an example of a cluster configuration according to an embodiment of the disclosure.

Referring to FIG. 9A, a first initiator anchor 901, a first responder anchor 903, a second responder anchor 905, and a third responder anchor 907 may configure a first cluster. The third responder anchor 907 in the first cluster may operate as a second initiator anchor 907 in a second cluster. The second initiator anchor 907, the first responder anchor 903, the fourth responder anchor 909, and the fifth responder anchor 911 may configure the second cluster. However, the embodiment is not limited thereto, and the number of clusters may vary, and the number of anchors included in each cluster may also vary.

According to an embodiment, all of the anchors within an effective transmission/reception distance from the initiator anchor may potentially become responder anchors. According to an embodiment, clusters may be configured in various ways for spatial reuse for time resources (e.g., ranging rounds) in a DL-TDoA system.

FIG. 9B illustrates another example of a cluster configuration according to an embodiment of the disclosure.

Referring to FIG. 9B, a first initiator anchor 921, a first responder anchor 923, a second responder anchor 925, and a third responder anchor 927 may configure a first cluster. The third responder anchor 927 in the first cluster may operate as a second initiator anchor 927 in a second cluster, and the first initiator anchor 921 in the first cluster may operate as a sixth responder anchor 921 in the second cluster.

The second initiator anchor 927, the first responder anchor 923, the second responder anchor 925, the fourth responder anchor 929, the fifth responder anchor 931, and the sixth responder anchor 921 may configure the second cluster. However, the embodiment is not limited thereto, and the number of clusters may vary, and the number of anchors included in each cluster may also vary.

Meanwhile, as DL-TDOA positioning performance varies according to the cluster configuration, a need for an infrastructure optimization algorithm has emerged. Since DL-TDOA positioning performance degrades as a difference between an actual distance between anchors (particularly, between an initiator and a responder) and a UWB ranging value increases, the infrastructure may be configured in consideration thereof. When configuring the infrastructure manually, it takes a lot of time and cost, positioning performance may not be guaranteed, and possible configuration methods may significantly increase according to the number of target anchors. Further, since radio emission angles vary according to the anchor, it may be difficult to predict the ranging quality between anchors with the naked eye.

When the number of anchors in a cluster is large, a centralized method calculating an optimal configuration for all anchors may have too high computational complexity, and communication resources between the computing server and each anchor may be consumed significantly. Further, there is a difficulty in that the computing server should know information on all target anchors in advance, and should also know update information when changes occur. Accordingly, a need for a distributed and dynamic algorithm for infrastructure optimization has emerged, and the distributed and dynamic algorithm has advantages of being easy to respond to environmental changes and being capable of rapid response in case of indoor structure change, obstacle occurrence, or anchor failure.

In the disclosure, a distributed algorithm for UWB DL-TDOA anchor clustering is proposed. According to an embodiment, in the distributed algorithm for UWB DL-TDOA anchor clustering, a state for each anchor may be set or defined as Stand-alone (SA), Global initiator (GI), Initiator (I), or Responder (R). In the disclosure, an anchor in a Stand-alone (SA) state is not included in a cluster and may join an optimal cluster through ranging with neighboring anchors or directly operate as a Global initiator (GI) within a cluster.

According to an embodiment, in the distributed algorithm for UWB DL-TDOA anchor clustering, a Configuration inform message (CIM), a Configuration change request message (CCRM), a Configuration change approve message (CCAM), a Cluster join request message (CJRM), and a Cluster join approve message (CJAM) may be set or defined. According to an embodiment, at least one of the CIM, the CCRM, the CCAM, the CJRM, and the CJAM may be transmitted or received through a UWB in-band channel or a Narrow-band (NB) channel.

According to an embodiment, when at least one of the CIM, the CCRM, the CCAM, the CJRM, and the CJAM is transmitted or received through a UWB in-band channel, the corresponding message may be implemented as vendor specific using a reserved field within a control field based on FiRa MAC 2.0.

According to an embodiment, the configuration inform message (CIM) may be configured as illustrated in Table 1.

**[Table 1]**

| Field | Size (bits) | Value (Hex) | Description |
|---|---|---|---|
| Message type | 8 | 0x01 | This field indicates a type of the current message (0x01 corresponds to CIM) |
| Anchor attribute | 170 | Variable | Information of transmitting anchor |
| Ranging resource structure attribute | 64 | Variable | Ranging resource structure of the anchor is complying with |
| Network configuration attribute | Variable | Variable | Set of clusters known to the anchor |
| The number of ranged anchors | 8 | Variable | The number of neighbor anchors which have ranged already |
| Ranging attribute | Variable | Variable | Specific ranging values of the neighbor anchors |

According to an embodiment, the cluster join request message (CJRM) may be configured as illustrated in Table 2.

**[Table 2]**

| Field | Size (bits) | Value (Hex) | Description |
|---|---|---|---|
| Message type | 8 | 0x02 | This field indicates a type of the current message (0x02 corresponds to CJRM) |
| Anchor attribute | 218 | Variable | Information of transmitting anchor |
| Target cluster identification | 48 | Variable | Cluster ID the anchor want to join |

According to an embodiment, the cluster join approve message (CJAM) may be configured as illustrated in Table 3.

**[Table 3]**

| Field | Size (bits) | Value (Hex) | Description |
|---|---|---|---|
| Message type | 8 | 0x03 | This field indicates a type of the current message (0x03 corresponds to CJAM) |
| Anchor attribute | 218 | Variable | Information of transmitting anchor |
| Cluster attribute | Variable | Variable | Cluster configuration after joining the requesting anchor |

According to an embodiment, the configuration change request message (CCRM) may be configured as illustrated in Table 4.

**[Table 4]**

| Field | Size (bits) | Value (Hex) | Description |
|---|---|---|---|
| Message type | 8 | 0x04 | This field indicates a type of the current message (0x04 corresponds to CCRM) |
| Anchor attribute | 218 | Variable | Information of transmitting anchor |
| Network configuration attribute | Variable | Variable | Target network configuration (i.e., a set of clusters including their roles) that the anchor want to configure |

According to an embodiment, the configuration change approve message (CCAM) may be configured as illustrated in Table 4.

**[Table 5]**

| Field | Size (bits) | Value (Hex) | Description |
|---|---|---|---|
| Message type | 8 | 0x05 | This field indicates a type of the current message (0x05 corresponds to CCAM) |
| Anchor attribute | 218 | Variable | Information of transmitting anchor |
| Network configuration attribute | Variable | Variable | Changed network configuration |

According to an embodiment, the Anchor attribute field described in Tables 1 to 5 may be configured as illustrated in Table 6.

**[Table 6]**

| Field | Size (bits) | Value (Hex) | Description |
|---|---|---|---|
| Attribute type | 8 | 0x01 | This field indicates a type of the current attribute (0x01 corresponds to anchor attribute) |
| Length | 16 | 146 | Length of the following fields in the attribute |
| Address of anchor | 48 | Variable | MAC address of anchor |
| Spatial 3D-coordinate of anchor | 96 | Variable | 3D coordinate (i.e., x, y, z) |
| | | 0: SA | |
| State | 2 | 1: GI | State of the anchor |
| | | 2: I | |
| | | 3: R | |
| Cluster identification | 48 | Variable | Cluster ID the anchor is included in (0 if the state of the anchor is 0 (i.e., SA)) |

According to an embodiment, the Ranging resource structure attribute field described in Table 1 may be configured as illustrated in Table 7.

**[Table 7]**

| Field | | Size (bits) | Value (Hex) | Description |
|---|---|---|---|---|
| Attribute type | | 8 | 0x02 | This field indicates a type of the current attribute (0x02 corresponds to ranging resource structure attribute) |
| Length | | 16 | 40 | Length of the following fields in the attribute |
| Ranging interval | block | 16 | Variable | Interval between two consecutive ranging blocks' start time |
| Ranging interval | round | 16 | Variable | Interval between two consecutive effective ranging rounds' start time in a ranging block |
| Number of effective ranging rounds in a ranging block | | 8 | Variable | |

According to an embodiment, the Network configuration attribute field described in Tables 1, 4, and 5 may be configured as illustrated in Table 8.

**[Table 8]**

| Field | Size (bits) | Value (Hex) | Description |
|---|---|---|---|
| Attribute type | 8 | 0x03 | This field indicates a type of the current attribute (0x03 corresponds to network configuration attribute) |
| Length | 16 | Variable | Length of the following fields in the attribute |
| Number of clusters | 8 | Variable | Number of clusters currently known |
| Cluster attribute | Variable | Variable | |

According to an embodiment, the Cluster attribute field described in Tables 3 and 8 may be configured as illustrated in Table 9.

**[Table 9]**

| Field | Size (bits) | Value (Hex) | Description |
|---|---|---|---|
| Attribute type | 8 | 0x04 | This field indicates a type of the current attribute (0x04 corresponds to cluster attribute) |
| Length | 16 | Variable | Length of the following fields in the attribute |
| Cluster identification | 48 | Variable | Cluster ID |
| Hop count | 8 | Variable | The number of intermediate initiators (including the current initiator) from the current cluster to the cluster including global initiator (A cluster including the global initiator has value of 0 for this field) |
| Number of anchors in the cluster | 8 | Variable | The number of included anchors in the cluster |
| Anchor attributes | Variable | Variable | Anchor information included in the cluster |

According to an embodiment, the Ranging attribute field described in Table 1 may be configured as illustrated in Table 10.

**[Table 10]**

| Field | Size (bits) | Value (Hex) | Description |
|---|---|---|---|
| Attribute type | 8 | 0x05 | This field indicates a type of the current attribute (0x05 corresponds to ranging attribute) |
| Length | 16 | Variable | Length of the following fields in the attribute |
| Address of paired anchor | 48 | Variable | MAC address of a paired anchor for ranging |
| Ranging value | 32 | Variable | Measured ranging value |

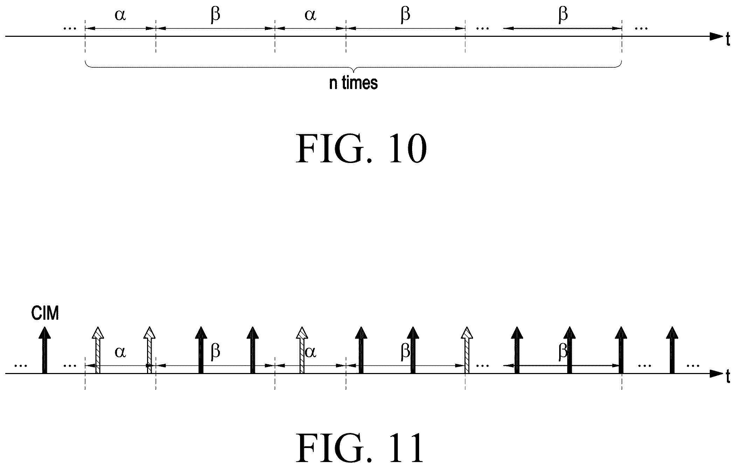

FIG. 10 is a view illustrating a scan operation of an anchor (SA) not included in a multi-cluster chain according to an embodiment of the disclosure.

In the distributed algorithm for UWB DL-TDOA anchor clustering, an anchor (SA) set or defined to a Stand-alone (SA) state may scan a Configuration inform message (CIM) from the surroundings during a preset period.

Referring to FIG. 10, the scan time of the anchor (SA) for the CIM may be set to _scan=(α+β)× . Here, α may be a scan duration, and β may be a sleep duration.

According to an embodiment, when a neighboring cluster is present as a result of the CIM scan, the anchor (SA) may join the cluster (cluster join) after performing ranging with a neighboring anchor. In this case, the anchor (SA) may transmit a Cluster join request message (CJRM) to a neighboring anchor for joining the cluster, and receive a Cluster join approve message (CJAM) from the neighboring anchor in response thereto.

According to an embodiment, when a neighboring cluster is not present as a result of the CIM scan, the anchor (SA) may create a cluster. In this case, the state of the corresponding anchor may be changed from SA to Global initiator (GI). The corresponding anchor may change its state to an initiator of the created cluster and broadcast the CIM.

FIG. 11 is a view illustrating an operation of an anchor (GI, I, R) included in a multi-cluster chain according to an embodiment of the disclosure.

In the distributed algorithm for UWB DL-TDOA anchor clustering, an anchor (GI, I, R) set or defined to a Global initiator (GI), Initiator (I), or Responder (R) state may periodically broadcast the CIM.

Referring to FIG. 11, an average CIM broadcast period may be set to r (where r<α). Here, α may be a scan duration, and α+β may be a scan interval. According to an embodiment, when the CIM is transmitted based on contention, the CIM broadcast period may not be constant. According to an embodiment, an anchor in a Responder (R) state may selectively transmit the CIM every CIM period. According to an embodiment, the anchor (GI, I, R) may transmit the CIM in a scheduled ranging slot or transmit the CIM in a contention-based time slot.

According to an embodiment, each anchor (GI, I, R) belonging to the cluster may perform periodic or aperiodic ranging with neighboring anchors.

According to an embodiment, each anchor (GI, I, R) belonging to the cluster may determine whether a change in the belonging cluster and role is required based on the CIM exchanged with neighboring anchors, a ranging result, or the CIM and the ranging result. According to an embodiment, each anchor (GI, I, R) may calculate a fitness of the role using collectable information.

According to an embodiment, when the anchor (GI, I, R) determines that a change in its role is required, a Configuration change request message (CCRM) may be transmitted to request the change. According to an embodiment, when the anchor (GI, I, R) receives the CCRM, it may relay the CCRM to other anchors in the cluster to which the anchor currently belongs (multicast method within the cluster).

According to an embodiment, when an anchor (I) in an Initiator (I) state receives the CCRM or the CJRM, it may transmit the CCAM or the CJAM including the cluster and role of the anchors (including the anchor requesting the request). According to an embodiment, an anchor (R) in a Responder (R) state may ignore the corresponding message CCRM or CJRM even when receiving it.

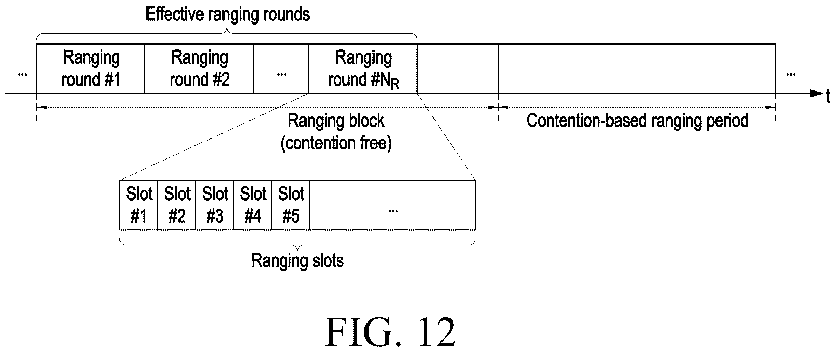

FIG. 12 illustrates an example of a ranging time resource structure for dynamic distributed clustering according to an embodiment of the disclosure.

The ranging time resource structure for dynamic distributed clustering illustrated in FIG. 12 may be referred to as a superframe structure.

Referring to FIG. 12, a superframe may be constituted of a contention free ranging block and a Contention-based ranging period. According to an embodiment, the resource structure of the ranging block may be configured based on the FiRa MAC specification.

A ranging block includes effective ranging rounds, and the effective ranging rounds may include a first ranging round (ranging round #1), a second ranging round (ranging round #2), ..., and an N_{R}th ranging round (ranging round #N_{R}). For example, the N_{R}th ranging round (ranging round #N_{R}) may include a first ranging slot (slot #1), a second ranging slot (slot #2), a third ranging slot (slot #3), or the like.

In the Contention-based ranging period, ranging may be performed between all anchor pairs assuming at least one CIM as a ranging Poll message. In this case, all ranging methods (OWR, SS-TWR, DS-TWR, and/or eSS-TWR) may be applicable.

According to an embodiment, the scan duration (α) may be set to be greater than the length of the superframe.

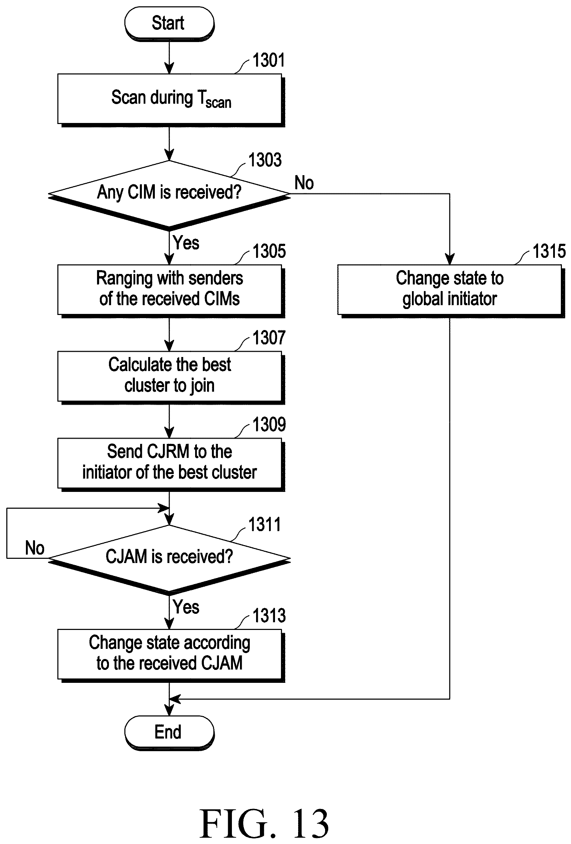

FIG. 13 is a flowchart illustrating an operation of an anchor in a Stand-alone (SA) state according to an embodiment of the disclosure.

Referring to FIG. 13, in operation 1301, an anchor in a Stand-alone (SA) state may scan a CIM during a set time (T_{scan}). In operation 1303, the anchor in the SA state may identify whether there is a CIM received according to the scan result.

If there is a CIM received according to the scan result (1303-YES), in operation 1305, the anchor in the SA state may perform ranging with at least one anchor (sender) transmitting at least one CIM. In operation 1307, the anchor in the SA state may calculate and/or determine a best cluster to join. In operation 1309, the anchor in the SA state may transmit a CJRM to an initiator anchor of the best cluster to join. In operation 1311, the anchor in the SA state may identify whether a CJAM corresponding to the CJRM is received.

If the CJAM corresponding to the CJRM is received (1311-YES), in operation 1313, the anchor in the SA state may change its state according to the received CJAM. If the CJAM corresponding to the CJRM is not received (1311-NO), in operation 1309, the anchor in the SA state may retransmit the CJRM to the initiator anchor of the best cluster to join.

If there is no CIM received according to the scan result (1303-NO), in operation 1315, the anchor in the SA state may change its state to a global initiator (GI).

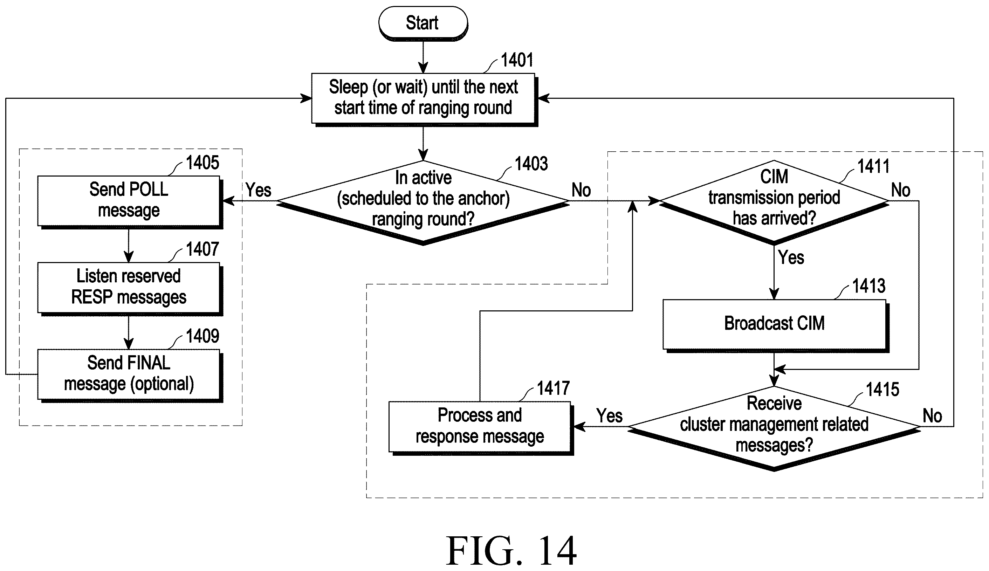

FIG. 14 is a flowchart illustrating an operation of an anchor in a Global Initiator (GI) state according to an embodiment of the disclosure.

Referring to FIG. 14, in operation 1401, an anchor in a Global Initiator (GI) state may sleep (or wait) until a next start time of a ranging round. In operation 1403, the anchor in the GI state may identify whether the current time is within an active ranging round scheduled to the anchor.

If the current time is within the active ranging round (1403-YES), in operation 1405, the anchor in the GI state may transmit a POLL message. In operation 1407, the anchor in the GI state may listen to a reserved RESP message. In operation 1409, the anchor in the GI state may optionally transmit a FINAL message.

If the current time is not within the active ranging round (1403-NO), in operation 1411, the anchor in the GI state may determine whether a CIM transmission period has arrived. If the CIM transmission period has arrived (1411-YES), in operation 1413, the anchor in the GI state may broadcast the CIM. In operation 1415, the anchor in the GI state may identify whether at least one cluster management related message is received.

If the CIM transmission period has not arrived (1411-NO), in operation 1415, the anchor in the GI state may identify whether at least one cluster management related message is received.

If at least one cluster management related message is received (1415-YES), in operation 1417, the anchor in the GI state may process the process and response message. Thereafter, the anchor in the GI state may perform operation 1411 again. If no cluster management related message is received (1415-NO), the anchor in the GI state may perform operation 1401 again.

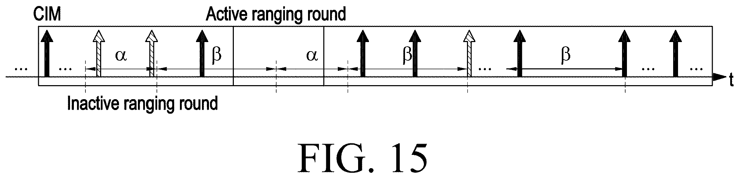

FIG. 15 illustrates an example of a ranging round of an anchor in a Global Initiator (GI) state according to an embodiment of the disclosure.

Referring to FIG. 15, an average CIM broadcast period is set to r (where r<α), α is a scan duration, and α+β may be a scan interval. A ranging round may include an active ranging round scheduled to the anchor and an in-active ranging round not scheduled.

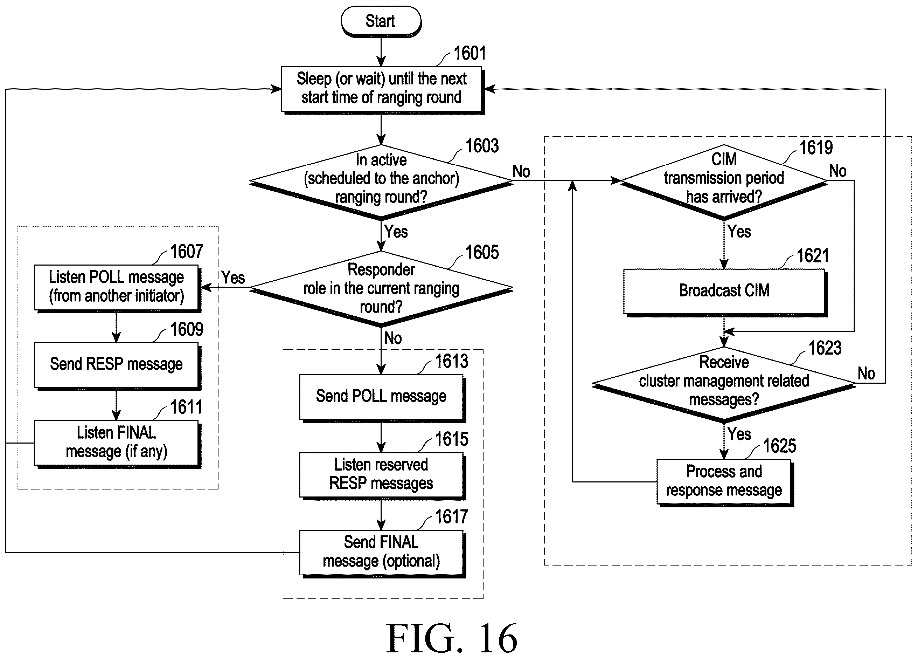

FIG. 16 is a flowchart illustrating an operation of an anchor in an Initiator (I) state according to an embodiment of the disclosure.

Referring to FIG. 16, in operation 1601, an anchor in an Initiator (I) state may sleep (or wait) until a next start time of a ranging round. In operation 1603, the anchor in the I state may identify whether the current time is within an active ranging round scheduled to the anchor. If the current time is within the active ranging round (1603-YES), in operation 1605, the anchor in the I state may determine whether it has a Responder role in the current ranging round. If the anchor in the I state has a Responder role in the current ranging round (1605-YES), in operation 1607, the anchor in the I state may receive a POLL message. In operation 1609, the anchor in the I state may transmit a RESP message. In operation 1611, the anchor in the I state may optionally receive a FINAL message.

If the anchor in the I state does not have a Responder role in the current ranging round (1605-NO), in operation 1613, the anchor in the I state may transmit a POLL message. In operation 1615, the anchor in the I state may listen to a reserved RESP message. In operation 1617, the anchor in the I state may optionally transmit a FINAL message.

If the current time is not within the active ranging round (1603-NO), in operation 1619, the anchor in the I state may determine whether a CIM transmission period has arrived. If the CIM transmission period has arrived (1619-YES), in operation 1621, the anchor in the I state may broadcast the CIM. In operation 1623, the anchor in the I state may identify whether at least one cluster management related message is received.

If the CIM transmission period has not arrived (1619-NO), in operation 1623, the anchor in the I state may identify whether at least one cluster management related message is received.

If at least one cluster management related message is received (1623-YES), in operation 1625, the anchor in the I state may process the process and response message. Thereafter, the anchor in the I state may perform operation 1619 again. If no cluster management related message is received (1623-NO), the anchor in the I state may perform operation 1601 again.

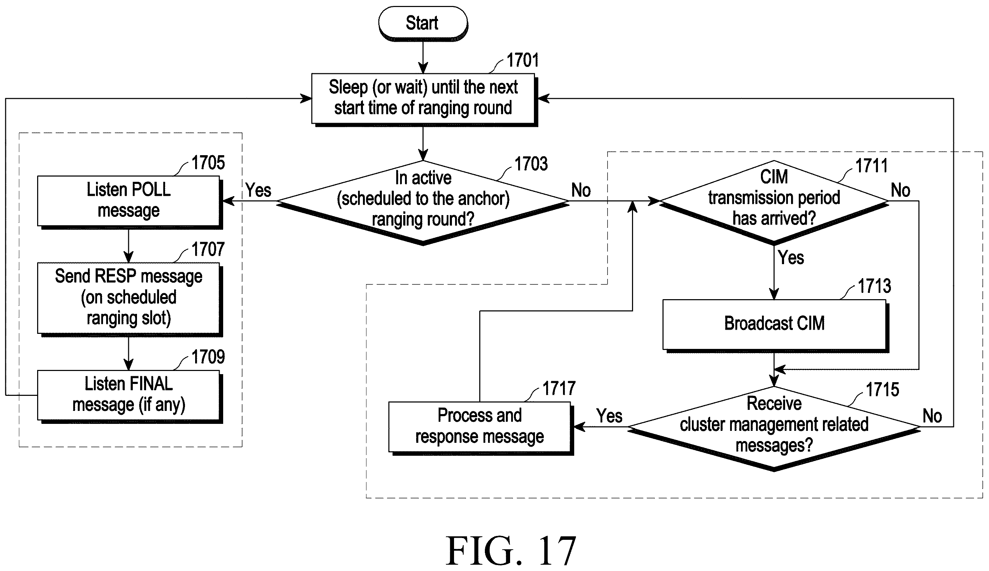

FIG. 17 is a flowchart illustrating an operation of an anchor in a Responder (R) state according to an embodiment of the disclosure.

Referring to FIG. 17, in operation 1701, an anchor in a Responder (R) state may sleep (or wait) until a next start time of a ranging round. In operation 1703, the anchor in the R state may identify whether the current time is within an active ranging round scheduled to the anchor.

If the current time is within the active ranging round (1703-YES), in operation 1705, the anchor in the R state may receive a POLL message. In operation 1707, the anchor in the R state may transmit a RESP message on a scheduled ranging slot. In operation 1709, the anchor in the R state may optionally receive a FINAL message.

If the current time is not within the active ranging round (1703-NO), in operation 1711, the anchor in the R state may determine whether a CIM transmission period has arrived. If the CIM transmission period has arrived (1711-YES), in operation 1713, the anchor in the R state may broadcast the CIM. In operation 1715, the anchor in the R state may identify whether at least one cluster management related message is received.

If the CIM transmission period has not arrived (1711-NO), in operation 1715, the anchor in the R state may identify whether at least one cluster management related message is received.

If at least one cluster management related message is received (1715-YES), in operation 1717, the anchor in the R state may process the process and response message. Thereafter, the anchor in the R state may perform operation 1711 again. If no cluster management related message is received (1715-NO), the anchor in the R state may perform operation 1701 again.

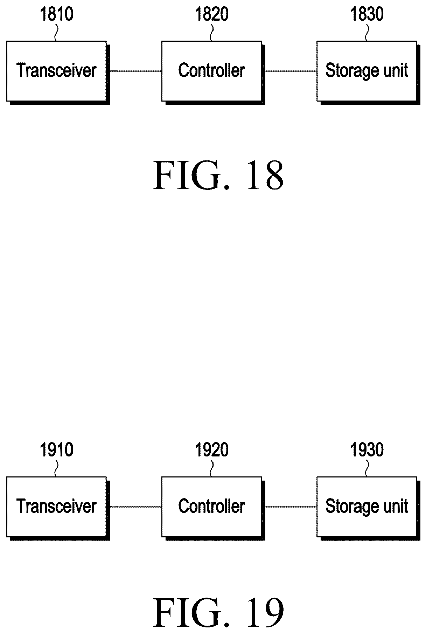

FIG. 18 is a block diagram illustrating an electronic device according to an embodiment of the disclosure.

In the embodiment of FIG. 18, the electronic device may be implemented as the UWB device, the anchor device in a Stand-alone (SA) state, the anchor device in a Global initiator (GI) state, the anchor device in an Initiator (I) state, or the anchor device in a Responder (R) state described above with reference to FIGS. 1 to 17.

Referring to FIG. 18, the electronic device may include a transceiver 1810, a controller 1820, and a storage unit 1830. In the disclosure, the controller may be defined as a circuit or an application specific integrated circuit or at least one processor.

The transceiver 1810 may transmit and receive signals to/from another entity. The transceiver 1810 may transmit/receive data to/from another UWB device through, e.g., NB communication, UWB communication or OOB communication (e.g., BLE communication).

The controller 1820 may control an overall operation of the anchor device in a Stand-alone (SA) state, the anchor device in a Global initiator (GI) state, the anchor device in an Initiator (I) state, or the anchor device in a Responder (R) state according to the embodiments proposed in the disclosure. For example, the controller 1820 may control the signal flow between the blocks to perform the operations described in connection with FIGS. 1 to 17.

The storage 1830 may store at least one of information transmitted and received through the transceiver 1810 and information generated through the controller 1820. For example, the storage unit 1830 may store information and data necessary for the method described with reference to FIGS. 1 to 17.

According to an embodiment, a method of operating a first anchor device in a stand-alone (SA) state may include identifying whether a configuration inform message (CIM) is received according to a scan result during a preset time (T_{scan}), upon receiving the CIM according to the scan result, performing ranging with a second anchor device transmitting the CIM, determining a cluster to which the first anchor device is to join according to the ranging result, and transmitting a cluster join request message (CJRM) to an initiator anchor of the cluster.

According to an embodiment, the method of operating the first anchor device may further include, upon failing to receive the CIM according to the scan result, changing a state of the first anchor device to a global initiator state.

According to an embodiment, the method of operating the first anchor device may further include receiving a cluster join approve message (CJAM) corresponding to the CJRM from the initiator anchor, and changing a state of the first anchor device based on the CJAM.

According to an embodiment, the CIM may include at least one of a message type indicating a type of the CIM, an anchor attribute including information on an anchor transmitting the CIM, a ranging resource structure attribute to be applied to the anchor, a network configuration attribute regarding a cluster set, and a ranging attribute including ranging values of neighboring anchors.

According to an embodiment, the CJRM may include at least one of a message type indicating a type of the CJRM, and a ranging attribute including an anchor attribute including information on an anchor transmitting the CJRM.

According to an embodiment, the CJAM may include at least one of a message type indicating a type of the CJAM, an anchor attribute including information on an anchor transmitting the CJAM, and a cluster attribute including cluster configuration information.

According to an embodiment, the method of operating the first anchor device may further include: upon determining that a role change of the first anchor device is required based on the CIM and the ranging result, transmitting a configuration change request message (CCRM); and receiving a configuration change approve message (CCAM) corresponding to the CCRM.

According to an embodiment, the CCRM may include at least one of a message type indicating a type of the CCRM, an anchor attribute including information on an anchor transmitting the CCRM, and a network configuration attribute including target network configuration information.

According to an embodiment, the CCAM may include at least one of a message type indicating a type of the CCAM, an anchor attribute including information on an anchor transmitting the CCAM, and a network configuration attribute including changed network configuration information.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the disclosure have been described above, various changes may be made thereto without departing from the scope of the disclosure. Thus, the scope of the disclosure should not be limited to the above-described embodiments, and should rather be defined by the following claims and equivalents thereof.

## Claims

1. A method of operating a first anchor device in a stand-alone (SA) state, the method comprising:
identifying whether a configuration inform message (CIM) is received according to a scan result during a preset time (T_{scan});
upon receiving the CIM according to the scan result, performing ranging with a second anchor device transmitting the CIM;
determining a cluster to which the first anchor device is to join according to the ranging result; and
transmitting a cluster join request message (CJRM) to an initiator anchor of the cluster.

2. The method of claim 1, further comprising, upon failing to receive the CIM according to the scan result, changing a state of the first anchor device to a global initiator state.

3. The method of claim 1, further comprising:
receiving a cluster join approve message (CJAM) corresponding to the CJRM from the initiator anchor; and
changing a state of the first anchor device based on the CJAM.

4. The method of claim 1, wherein the CIM includes a message type indicating a type of the CIM, an anchor attribute including information on an anchor transmitting the CIM, a ranging resource structure attribute to be applied to the anchor, a network configuration attribute regarding a cluster set, and a ranging attribute including ranging values of neighboring anchors.

5. The method of claim 1, wherein the CJRM includes a message type indicating a type of the CJRM, and a ranging attribute including an anchor attribute including information on an anchor transmitting the CJRM.

6. The method of claim 3, wherein the CJAM includes a message type indicating a type of the CJAM, an anchor attribute including information on an anchor transmitting the CJAM, and a cluster attribute including cluster configuration information.

7. The method of claim 1, further comprising:
upon determining that a role change of the first anchor device is required based on the CIM and the ranging result, transmitting a configuration change request message (CCRM); and
receiving a configuration change approve message (CCAM) corresponding to the CCRM.

8. The method of claim 7, wherein the CCRM includes a message type indicating a type of the CCRM, an anchor attribute including information on an anchor transmitting the CCRM, and a network configuration attribute including target network configuration information.

9. The method of claim 7, wherein the CCAM includes a message type indicating a type of the CCAM, an anchor attribute including information on an anchor transmitting the CCAM, and a network configuration attribute including changed network configuration information.

10. A first anchor device in a stand-alone (SA) state, comprising:
a transceiver; and
a controller, wherein the controller is configured to:
identify whether a configuration inform message (CIM) is received according to a scan result during a preset time (T_{scan});
upon receiving the CIM according to the scan result, perform ranging with a second anchor device transmitting the CIM;
determine a cluster to which the first anchor device is to join according to the ranging result; and
control to transmit a cluster join request message (CJRM) to an initiator anchor of the cluster.

11. The first anchor device of claim 10, wherein the controller is configured to, upon failing to receive the CIM according to the scan result, change a state of the first anchor device to a global initiator state.

12. The first anchor device of claim 10, wherein the controller is configured to:
receive a cluster join approve message (CJAM) corresponding to the CJRM from the initiator anchor; and
change a state of the first anchor device based on the CJAM.

13. The first anchor device of claim 10, wherein the CIM includes a message type indicating a type of the CIM, an anchor attribute including information on an anchor transmitting the CIM, a ranging resource structure attribute to be applied to the anchor, a network configuration attribute regarding a cluster set, and a ranging attribute including ranging values of neighboring anchors.

14. The first anchor device of claim 10, wherein the CJRM includes a message type indicating a type of the CJRM, and a ranging attribute including an anchor attribute including information on an anchor transmitting the CJRM.

15. The first anchor device of claim 10, wherein
the controller is configured to:
upon determining that a role change of the first anchor device is required based on the CIM and the ranging result, control to transmit a configuration change request message (CCRM); and
receive a configuration change approve message (CCAM) corresponding to the CCRM.
